# EUROPEAN PATENT APPLICATION

(11) **EP 4 068 028 A1**
(43) Date of publication of application: **05.10.2022**
(21) Application number: 22157212.6
(22) Date of filing: 17.02.2022
(51) Int. Cl.: G05B 23/02

(54) **SCREEN GENERATION ASSISTING PROGRAM, SCREEN GENERATION ASSISTING APPARATUS, AND GENERATION ASSISTING METHOD**

(30) Priority: 30.03.2021 JP 2021058122
(71) Applicant: FUJITSU LIMITED, Kawasaki-shi, Kanagawa 211-8588 (JP)
(72) Inventor: KOYAMA, Kenji, Kawasaki-shi, Kanagawa, 211-8588 (JP); MIYABARA, Yuko, Kawasaki-shi, Kanagawa, 211-8588 (JP); SHIOIRI, Yuta, Kawasaki-shi, Kanagawa, 211-8588 (JP)
(74) Representative: Hoffmann Eitle

(57) **Abstract**

A screen generation assisting program that causes a computer to execute a process that includes accepting, in an input screen to which information for generating a screen of a first hierarchical level is input, designation of a number of elements of a second hierarchical level that serves as a lower level than the first hierarchical level; associating a first template for generating the screen of the first hierarchical level with second templates for generating a screen of the second hierarchical level; generating the screen of the second hierarchical level by displaying the pieces of data in regions of the second templates; and generating the screen of the first hierarchical level by displaying, in region of the first template that corresponds to the regions of the second templates, a summarized value of the same number of the pieces of data of the second hierarchical level.

## Description

### FIELD

The embodiment discussed herein is related to a screen generation assisting program, a screen generation assisting apparatus, and a screen generation assisting method.

### BACKGROUND

There have been related-art techniques that generate screens for hierarchically performing monitoring, management, analysis, and so forth on data. For example, there is a case in which, for example, data related to facilities in a factory is collected, the collected data is analyzed in accordance with a configuration of a facility group of the factory, and analyzed results are displayed. In this case, since there are a plurality of production lines in the factory and a plurality of facilities are installed in each of the production lines, the data related to each of the facilities is data that may be handled in a hierarchical structure of the factory, the production lines, and the facilities.

As a technique for hierarchically processing data, for example, a file creation system has been proposed. In this file creation system, when a file is created by defining a code system of hierarchically classified items, file creation is performed by inputting data while the hierarchical structure of the entirety of the code system is recognized with simple operation. According to this system, basic items including the number of hierarchical levels are input to input units of the basic items, a title frame including each of the hierarchical levels is drawn on a screen based on the input basic items, and an upper hierarchical level including the lowest level in the title frame of each hierarchical level is designated. Thus, input frames for inputting records of items belonging to the designated upper hierarchical level are hierarchically drawn on the screen. By inputting the records of the items corresponding to the hierarchical levels into these input frames, these records are linked in the hierarchical order and stored in a file.

Also, a data storage apparatus has been proposed. This data storage apparatus flexibly supports changes in a hierarchical structure of hierarchical data and converts hierarchical data into data in a relational database format to output the data. This apparatus analyzes the structure of hierarchical data to create hierarchical structural information indicating data items of the hierarchical data, collates data items of table definition information with the data items of the hierarchical structural information, and, when there is a new item in the hierarchical structural information, adds the new item to the table definition information. This apparatus stores the hierarchical data on an item-by-item basis in accordance with the table definition information after the addition, reads the hierarchical data from a data storage area in accordance with the table definition information, and outputs the read hierarchical data in the relational database format.

Japanese Laid-open Patent Publication Nos. 2002-041344 and 2002-183142 are disclosed as related art.

### SUMMARY

### [TECHNICAL PROBLEM]

For example, as described above, in order to use a tool that displays a screen for hierarchically performing monitoring, management, analysis, and so forth on data related to facilities in a factory, information related to an arrangement (configuration) of facilities in the factory is registered while defining a relationships between levels. Assuming that a user who is a user of the tool performs such registration, the user is not necessarily highly skilled in system integration (SI) work. This may cause errors in the relationship between hierarchical levels in the registered content, and accordingly, an appropriate screen is not necessarily generated.

In one aspect, an object of the disclosed technique is to assist in suppressing errors in registration of the relationships between hierarchical levels in generating screens that hierarchically display data.

### [SOLUTION TO PROBLEM]

According to an aspect of the embodiments, a screen generation assisting program that causes at least one computer to execute a process, the process includes accepting, in an input screen to which information for generating a screen of a first hierarchical level is input, designation of a number of elements of a second hierarchical level that serves as a lower level than the first hierarchical level; associating a first template for generating the screen of the first hierarchical level with second templates which are for generating a screen of the second hierarchical level and a number of which is equal to the number of elements; generating the screen of the second hierarchical level by displaying the pieces of data in regions of the second templates; and generating the screen of the first hierarchical level by displaying, in region of the first template that corresponds to the regions of the second templates, a summarized value of the same number of the pieces of data of the second hierarchical level as the number of elements.

### [ADVANTAGIOUS EFFECTS OF INVENTION]

In the one aspect, an effect that enables assistance in suppression of errors in the registration of the relationships between the hierarchical levels in generating the screens that hierarchically display data is obtained.

### BRIEF DESCRIPTION OF DRAWINGS

FIG. 1 is a diagram explaining screens that hierarchically display data;
FIG. 2 is a functional block diagram of a screen generation assisting apparatus;
FIG. 3 is a diagram illustrating an example of a factory input screen;
FIG. 4 is a diagram illustrating an example of a production line input screen;
FIG. 5 is a diagram illustrating an example of a facility input screen;
FIG. 6 is a diagram schematically illustrating an example of a screen master;
FIG. 7 is a diagram explaining association of templates;
FIG. 8 is a diagram illustrating an example of result data;
FIG. 9 is a diagram illustrating an example of a summarization database (DB);
FIG. 10 is a diagram illustrating an example of a production line screen;
FIG. 11 is a block diagram schematically illustrating a configuration of a computer that functions as a screen generation assisting apparatus; and
FIG. 12 is a flowchart illustrating an example of a screen generation assisting process.

### DESCRIPTION OF EMBODIMENTS

Hereinafter, an example of an embodiment according to the disclosed technique will be described with reference to the drawings. In the following embodiment, the example is described in which the disclosed technique is applied to the case where generation of screens is assisted. The screens are provided for hierarchically performing monitoring, management, analysis, and so forth on data related to facilities included in production lines in a factory.

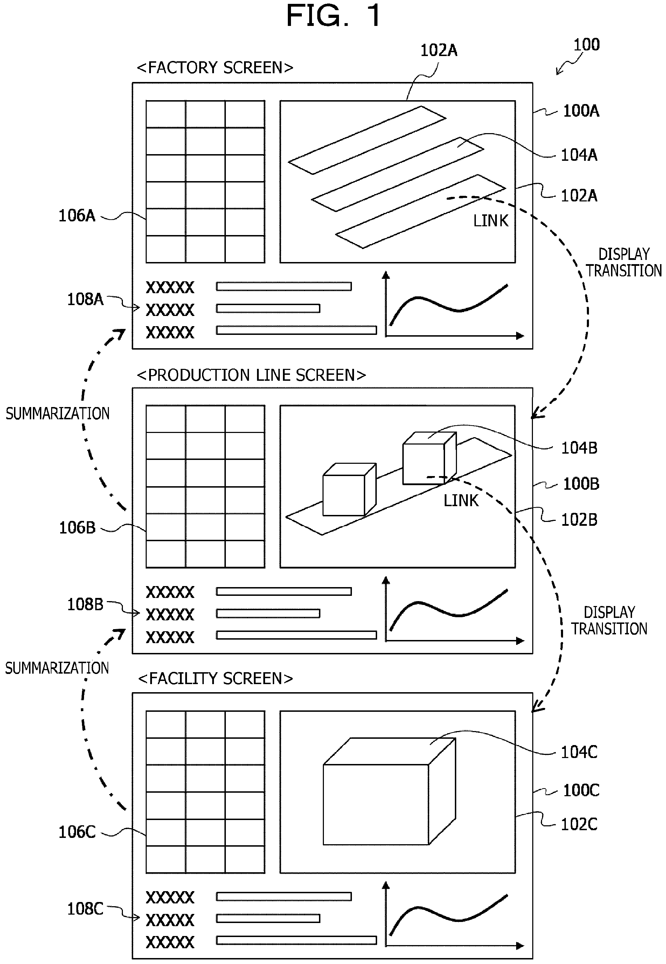

As illustrated in FIG. 1, a screen generation assisting apparatus 10 according to the present embodiment assists generation of a screen group 100 that includes a factory screen 100A which displays data related to facilities on a factory-by-factory basis, a production line screen 100B which displays data related to the facilities on a production-line-by-production-line basis, and a facility screen 100C which displays data related to the facilities on a facility-by-facility basis. the relationship between the factory screen 100A and the production line screen 100B, the factory screen 100A exemplifies a "screen of a first hierarchical level" of the disclosed technique, and the production line screen 100B exemplifies a "screen of the second hierarchical level" of the disclosed technique. In the relationship between the production line screen 100B and the facility screen 100C, the production line screen 100B exemplifies the "screen of a first hierarchical level" of the disclosed technique, and the facility screen 100C exemplifies the "screen of the second hierarchical level" of the disclosed technique. The details of each of the screens will be described later.

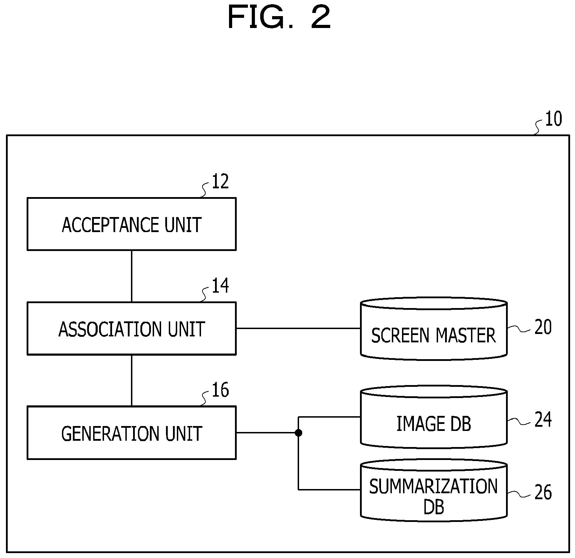

As illustrated in FIG. 2, the screen generation assisting apparatus 10 according to the present embodiment includes, in terms of the functions, an acceptance unit 12, an association unit 14, and a generation unit 16. A screen master 20, an image database (DB) 24, and a summarization DB 26 are stored in a predetermined storage region of the screen generation assisting apparatus 10.

The acceptance unit 12 accepts, in an input screen to which information for generating the screen of the first hierarchical level is input, designation of the number of elements of the second hierarchical level that serves as a lower level relative to the first hierarchical level.

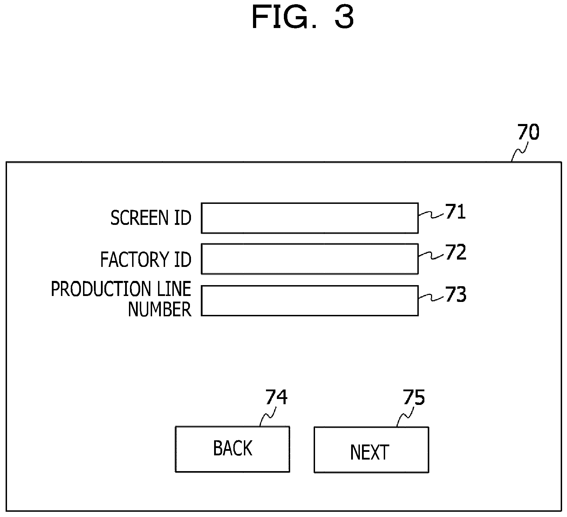

For example, as illustrated in FIG. 3, the acceptance unit 12 displays, in a display unit, a factory input screen 70 that accepts information for generating the factory screen 100A. In the example illustrated in FIG. 3, the factory input screen 70 includes a screen identification (ID) input region 71 for inputting a screen ID that is identification information of the screen group 100 and a factory ID input region 72 for inputting a factory ID that is identification information of the factory and the factory screen 100A. The factory ID and the factory screen ID may be separately set. The factory input screen 70 includes a production line number input region 73 for inputting the number of production lines included in the factory indicated by the factory ID. For example, the factory input screen 70 includes a "BACK" button 74 to be selected in the case of returning to the display of the main menu or the like. The factory input screen 70 includes a "NEXT" button 75 to be selected at the time of transition to a production line input screen 80 that accepts the information for generating the production line screen 100B serving as a lower level screen relative to the factory screen 100A.

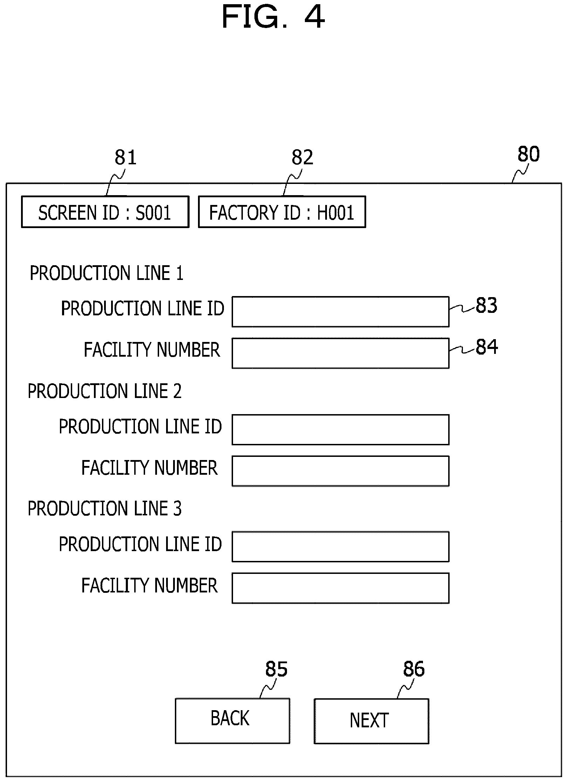

In the factory input screen 70, when values are input to the screen ID input region 71, the factory ID input region 72, and the production line number input region 73 and the "NEXT" button 75 is selected, the acceptance unit 12 displays in the display unit the production line input screen 80 as illustrated in FIG. 4. In so doing, the acceptance unit 12 provides, in the production line input screen 80, as many input regions as the number of production lines having been input to the production line number input region 73 of the factory input screen 70. FIG. 4 illustrates an example of a production line input screen 80 when "3" has been input to the production line number input region 73 of the factory input screen 70.

For example, in the example illustrated in FIG. 4, the production line input screen 80 includes a display region 81 for the screen ID and a display region 82 for the factory ID having been input in the factory input screen 70. For each of the production lines, the production line input screen 80 includes a production line ID input region 83 for inputting a production line ID serving as identification information of the production line and the production line screen 100B. The production line ID and the production line screen ID may be separately set. The production line input screen 80 includes, for each of the production lines, a facility number input region 84 for inputting the number of facilities included in the production line. The production line input screen 80 includes a "BACK" button 85 to be selected in the case of returning to the display of the factory input screen 70. The production line input screen 80 includes a "NEXT' button 86 to be selected at the time of transition to a facility input screen 90 that accepts information for generating the facility screen 100C serving as a lower level screen relative to the production line screen 100B.

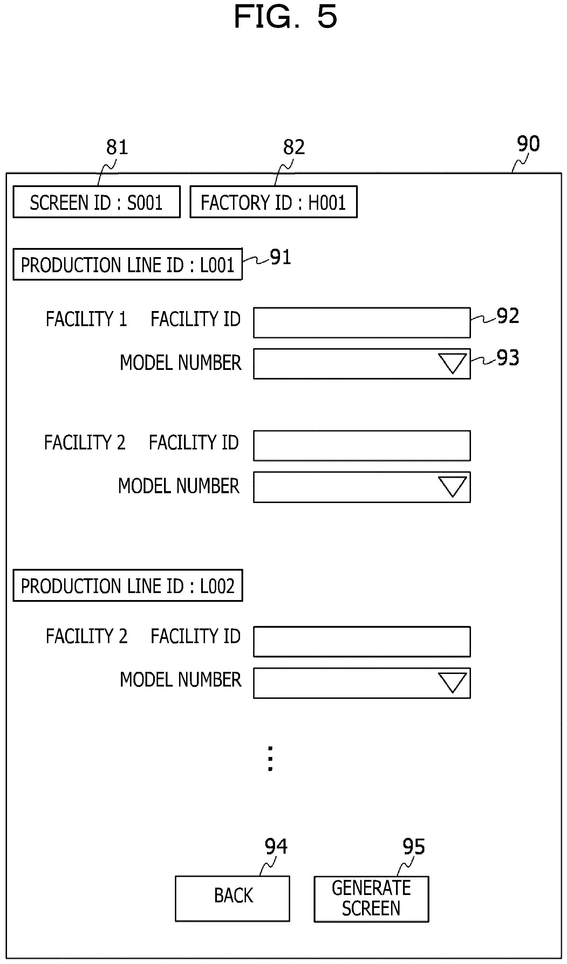

In the production line input screen 80, when values are input to the production line ID input region 83 and the facility number input region 84 for each of the production lines and the "NEXT" button 86 is selected, the acceptance unit 12 displays in the display unit the facility input screen 90 as illustrated in FIG. 5. In so doing, the acceptance unit 12 provides, in the facility input screen 90, for each of the production lines, as many input regions as the number of facilities having been input to the facility number input region 84 of the production line input screen 80. FIG. 5 illustrates an example of the facility input screen 90 when "2" has been input to the facility number input region 84 of the production line input screen 80 for a production line indicated by the production line ID L001.

For example, in the example illustrated in FIG. 5, the facility input screen 90 includes the display region 81 for the screen ID, the display region 82 for the factory ID, and a display region 91 for the production line ID for each of the production lines having been input in the production line input screen 80. The facility input screen 90 includes, for each of the production lines, an input region for the production line associated with the display region 91 of the production line ID. The input region for each of the production lines includes facility ID input regions 92 for inputting facility IDs serving as identification information of facility screens 100C and facilities included in the production line and model number input regions 93 for inputting model numbers of the facilities. The facility IDs and the facility screen IDs may be separately set. Each of the model number input regions 93 may be an input region of a pull-down menu or the like in which model numbers of facilities registered in advance are selected for input. The facility input screen 90 includes a "BACK" button 94 to be selected in the case of returning to the display of the production line input screen 80. The facility input screen 90 includes a "GENERATE SCREEN" button 95 to be selected to generate the screen group 100 based on the values input to the input screens.

When values are input to the facility ID input region 92 and the model number input region 93 for each of the facilities of each of the production lines in the facility input screen 90 and the "GENERATE SCREEN" button 95 is selected, the acceptance unit 12 transfers the values having been input in the input screens to the association unit 14. The number of production lines and the number of facilities are examples of the number of elements in the disclosed technique.

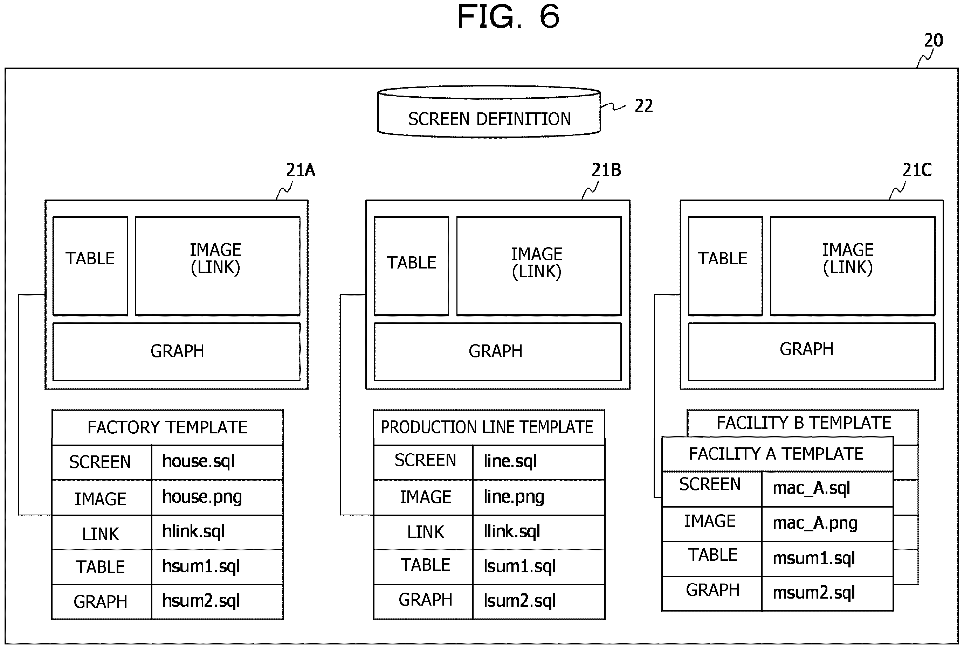

Here, the screen master 20 is described. FIG. 6 schematically illustrates an example of the screen master 20. The screen master 20 includes a factory template 21A, a production line template 21B, a facility template 21C, and a screen definition 22. The factory template 21A is a template for generating the factory screen 100A. The production line template 21B is a template for generating the production line screen 100B. The facility template 21C is a template for generating the facility screen 100C. The facility template 21C is prepared for a model number of each of the facilities. Hereinafter, when the factory template 21A, the production line template 21B, and the facility template 21C are described without being distinguished from each other, they are simply referred to as "templates 21".

Each of the templates 21 includes regions that respectively display screen elements such as an image, a table, and a graph with which setting information such as data and parts to be displayed in the regions is associated. For example, items including a "SCREEN", an "IMAGE", a "TABLE", and a "GRAPH" are designated as the setting information of each of the templates 21. The item "LINK" is also designated in the setting information of the factory template 21A and the production line template 21B.

Frames to respectively serve as bases of the factory screen 100A, the production line screen 100B, and the facility screen 100C are designated in "SCREEN"s. In the "IMAGE", an image to be displayed in a region set for image display in each of the templates 21 is designated. The image to be displayed in the region set for the image display is an image including objects included in each hierarchical level. For example, in the case of the factory screen 100A, in the image, objects indicating the respective production lines associated with the production line IDs are drawn in accordance with an arrangement (configuration) in the factory. In the case of the production line screen 100B, in the image, objects indicating the respective facilities associated with the facility IDs are drawn in accordance with an arrangement (configuration) in the production line. In the case of the facility screen 100C, in the image, an object indicating the facility associated with the facility ID is a drawn. Each image is created in advance by using, for example, three-dimensional computer graphics or the like and is stored in the image DB 24.

In the "LINK", the objects in the image for which links are to be set and a lower level screen to serve as the link destinations are designated. For example, in the "LINK" of the factory template 21A, it is designated that the object of each of the production lines included in the image designated by the "IMAGE" and the production line screen 100B associated with the same production line ID as the production line ID of this object are associated with each other by a link. In the "LINK" of the production line template 21B, it is designated that the object of each of the facilities included in the image designated by the "IMAGE" and the facility screen 100C associated with the same facility ID as the facility ID of this object are associated with each other by a link.

In the "TABLE" and the "GRAPH", data to be displayed in a region set for the table or graph in the templates 21 and a form, parts, and so forth of the table or graph are designated. The data designated in the facility template 21C is an item of the summarization DB 26, which will be described later. The data designated by each of the factory template 21A and the production line template 21B is a summarized value of the data of the table or graph displayed in a corresponding region of a lower level screen.

The example illustrated in FIG. 6 is an example in which, in the setting information of the templates 21, file names of designated data and image and file names of, for example, a structured query language (SQL) for obtaining files of the designated data and image are set.

Definitions such as image data of the above-described frames, parts, and so forth as well as the positions, sizes, and so forth to display the image data on the screen are registered in the screen definition 22.

By using the templates 21 in the screen master 20, the association unit 14 associates a first template for generating the screen of the first hierarchical level with second templates which are for generating screens of the second hierarchical-level and the number of which is as many as the number of elements.

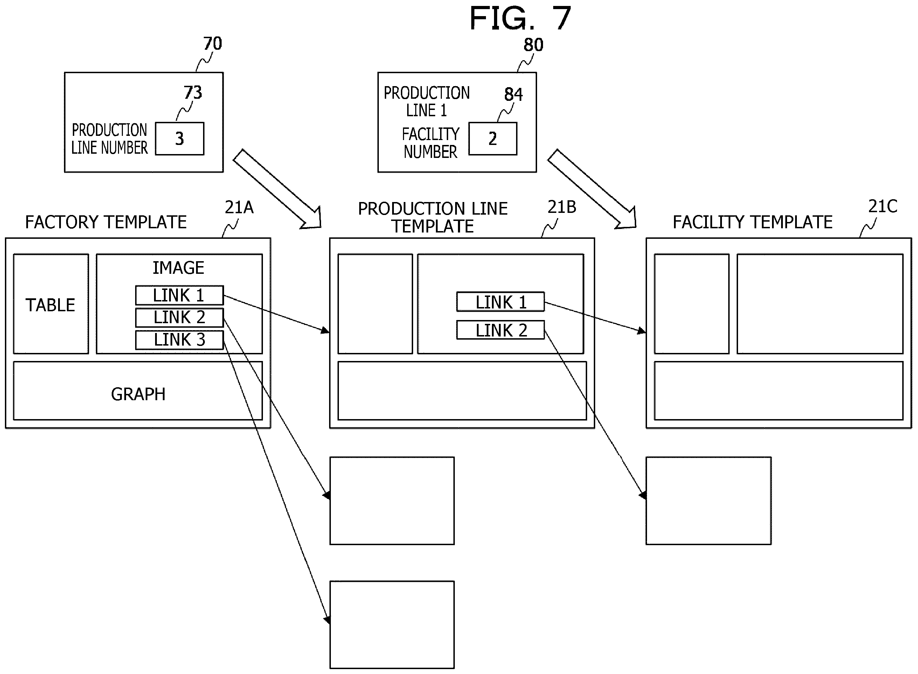

For example, as illustrated in FIG. 7, the association unit 14 prepares as many production line templates 21B as the number indicated by the value input to the production line number input region 73 of the factory input screen 70 and associates the production line templates 21B with the respective production line IDs. The association unit 14 sets a link between each of the objects indicating the production line included in the image designated in the setting information of the factory template 21A and the production line template 21B with which the same production line ID as the production line ID of this object is associated. For example, when an object indicating any one of the production lines is selected from the image, the association unit 14 sets a link for transition to the production line screen 100B generated from the production line template 21B associated with the same production line ID as the production line ID of the selected object.

Likewise, the association unit 14 prepares as many facility templates 21C as the number indicated by the value input to the facility number input region 84 of the production line input screen 80 and associates the facility templates 21C with the respective facility IDs. The association unit 14 sets a link between each of the objects indicating the facility included in the image designated in the setting information of the production line template 21B and the facility template 21C with which the same facility ID as the facility ID of this object is associated. For example, when an object indicating any one of the facilities is selected from the image, the association unit 14 sets a link for transition to the facility screen 100C generated from the facility template 21C associated with the same facility ID as that of the selected object.

The association unit 14 transfers to the generation unit 16 a template group which includes one factory template 21A, as many production line templates 21B as the number of production lines, and as many facility templates 21C as the number of facilities and in which associations between the upper and lower hierarchical levels have been set.

The generation unit 16 generates the screens in preset regions of the templates 21 by displaying, for example, the images, the tables, and the graphs in accordance with the setting information of the templates 21. Regarding the tables and the graphs, for example, the generation unit 16 obtains data designated by the setting information of the templates 21 from the summarization DB 26, forms the tables and the graphs, and displays the tables and the graphs in set regions of the templates 21. In so doing, the generation unit 16 uses summarized values of data of lower hierarchical levels as the data to be displayed as the tables and the graphs.

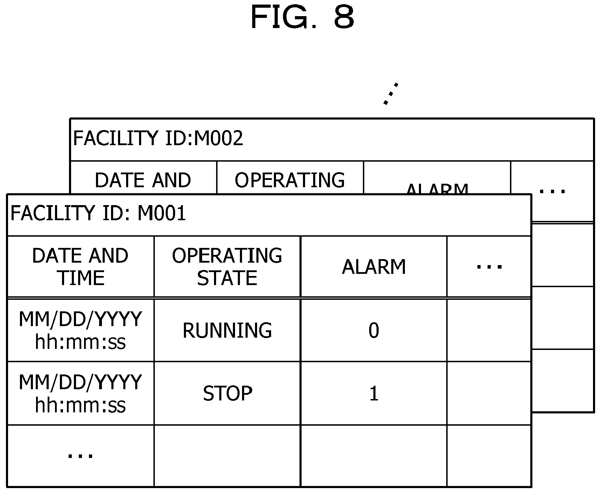

Here, the summarization DB 26 is described. The summarization DB 26 stores, for example, data obtained by summarizing result data of the individual facilities as illustrated in FIG. 8 in accordance with a summarization method determined by a summarization master (not illustrated) or the like. FIG. 8 illustrates an example in which an "OPERATING STATE", an "ALARM", and so forth of the facility at individual "DATE AND TIME"s of data sampling are included in the items of the result data. The "ALARM" is data indicating whether an alarm has been issued at a target date and time. The value of the "ALARM" is "1" when the alarm has been issued and "0" when the alarm has not been issued. The items included in the result data are not limited to the example illustrated in FIG. 8. Various types of data related to the operation of the facility such as the temperature, the operating speed, and the power consumption of the facility may be adopted.

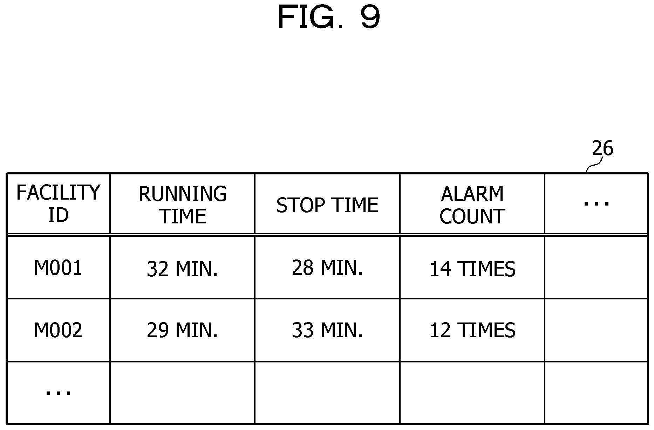

As the summarization method, for example, summarization timing such as predetermined times, predetermined days, and predetermined months, a summarization period such as a predetermined period of time, a day, and a month, calculation expressions for averages and totals of the data in the summarization period, and so forth may be determined. As the calculation expressions, calculation expressions to calculate the differences, ratios, and so forth between the items may be determined. The summarization DB 26 is updated by batch processing performed on a summarization-timing-by-summarization-timing basis. FIG. 9 illustrates an example of the summarization DB 26. In the example illustrated in FIG. 9, for each of the facilities, data such as summarized "RUNNING TIME", "STOP TIME", and "ALARM COUNT" is associated with "FACILITY ID" of the facility.

The summarization DB 26 may store the result data summarized and updated through batch processing by an external apparatus in a predetermined storage area of the screen generation assisting apparatus 10 every time the updating is performed. The screen generation assisting apparatus 10 may include a summarization unit. In this case, the summarization unit obtains the result data, summarizes the result data by using batch processing, and updates the summarization DB 26 stored in the predetermined storage area of the screen generation assisting apparatus 10.

For example, it is assumed that the "RUNNING TIME", the "STOP TIME", and the "ALARM COUNT" are designated to be displayed in the "TABLE" or "GRAPH" of the setting information of the templates 21. In this case, the generation unit 16 generates the facility screen 100C by forming a table or graph from pieces of data of corresponding items obtained from the summarization DB 26 and displaying the table or graph in the region for displaying the table or graph set in the facility template 21C. The generation unit 16 displays, in the region for displaying the table or graph set in the production line template 21B, summarization results of data to be displayed in corresponding regions of the facility templates 21C associated with the production line template 21B by links. Thus, the generation unit 16 generates the production line screen 100B. For example, the summarization results are the totals, averages, or the like of the data of the individual facility templates 21C associated with the production line template 21B by the links. The generation unit 16 displays, in the region for displaying the table or graph set in the factory template 21A, summarization results of data to be displayed in the corresponding regions of the production line templates 21B associated with the factory template 21A by the links. Thus, the generation unit 16 generates the factory screen 100A. For example, the summarization results are the totals, averages, or the like of the data of each of the production line templates 21B associated with the factory template 21A by the link.

When the above-described processing is performed, the screen group 100 including the factory screen 100A, the production line screens 100B, and the facility screens 100C as schematically illustrated in FIG. 1 is generated. FIG. 1 illustrates one of the plurality of production line screens 100B and one of the plurality of facility screens 100C included in the screen group 100. In the example illustrated in FIG. 1, the factory screen 100A includes an image 102A of the factory including objects 104A of the production lines, a table 106A, and a graph 108A. The production line screen 100B includes an image 102B of the production line including objects 104B of the facilities, a table 106B, and a graph 108B. The facility screen 100C includes an image 102C of the facility including an object 104C of the facility, a table 106C, and a graph 108C. In the table 106A and the graph 108A, the summarization results of the data used for table 106B and graph 108B of the individual production line screens 100B serving a lower level relative to the factory screen 100A are used. In the table 106B and the graph 108B, the summarization results of the data used for the table 106C and the graph 108C of the individual facility screens 100C serving as a lower level relative to the production line screen 100B are used.

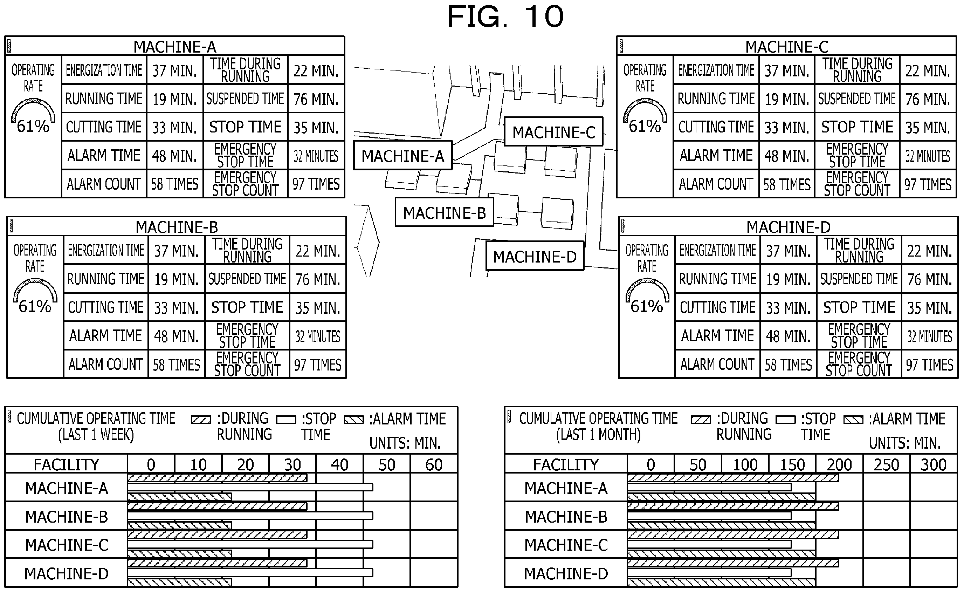

In a state in which the factory screen 100A is displayed, when the object 104A of any one of the production lines is selected, the display transitions to the production line screen 100B associated with the same production line ID as that of the selected object 104A. In a state in which any one of the production line screens 100B is displayed, when the object 104B of any one of the facilities is selected, the display transitions to the facility screen 100C associated with the same facility ID as that of the selected object 104B. FIG. 10 illustrates an example of the screen in more detail. FIG. 10 is an example of the production line screen 100B.

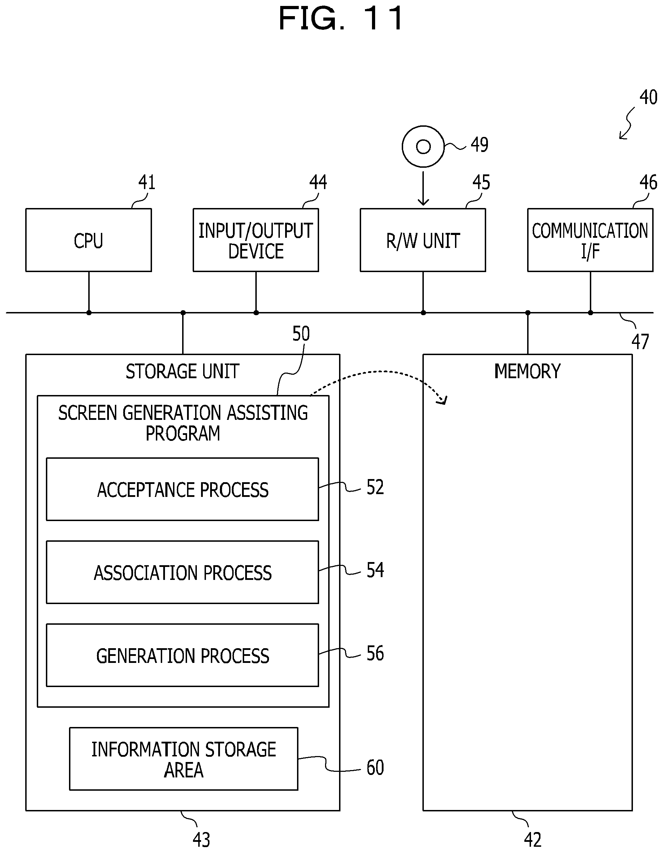

The screen generation assisting apparatus 10 may be realized by using, for example, a computer 40 illustrated in FIG. 11. The computer 40 includes a central processing unit (CPU) 41, a memory 42 serving as a temporary storage area, and a nonvolatile storage unit 43. The computer 40 also includes an input/output device 44 such as an input unit, a display unit, and the like, and a read/write (R/W) unit 45 that controls reading and writing of data from and to a storage medium 49. The computer 40 also includes a communication interface (I/F) 46 that is coupled to a network such as the Internet. The CPU 41, the memory 42, the storage unit 43, the input/output device 44, the R/W unit 45, and the communication I/F 46 are coupled to each other via a bus 47.

The storage unit 43 may be realized by using a hard disk drive (HDD), a solid-state drive (SSD), a flash memory, or the like. The storage unit 43 serving as a storage medium stores a screen generation assisting program 50 that causes the computer 40 to function as the screen generation assisting apparatus 10. The screen generation assisting program 50 includes an acceptance process 52, an association process 54, and a generation process 56. The storage unit 43 includes an information storage area 60 in which information for configuring each of the screen master 20, the image DB 24, and the summarization DB 26 is stored.

The CPU 41 reads the screen generation assisting program 50 from the storage unit 43, loads the screen generation assisting program 50 on the memory 42, and sequentially executes the processes included in the screen generation assisting program 50. The CPU 41 executes the acceptance process 52 to operate as the acceptance unit 12 illustrated in FIG. 2. The CPU 41 executes the association process 54 to operate as the association unit 14 illustrated in FIG. 2. The CPU 41 executes the generation process 56 to operate as the generation unit 16 illustrated in FIG. 2. The CPU 41 reads information from the information storage area 60 to load each of the screen master 20, the image DB 24, and the summarization DB 26 on the memory 42. Thus, the computer 40 having executed the screen generation assisting program 50 functions as the screen generation assisting apparatus 10. The CPU 41 that executes the program is hardware.

The functions realized by the screen generation assisting program 50 may also be realized by using, for example, a semiconductor integrated circuit, more in detail, an application-specific integrated circuit (ASIC) or the like.

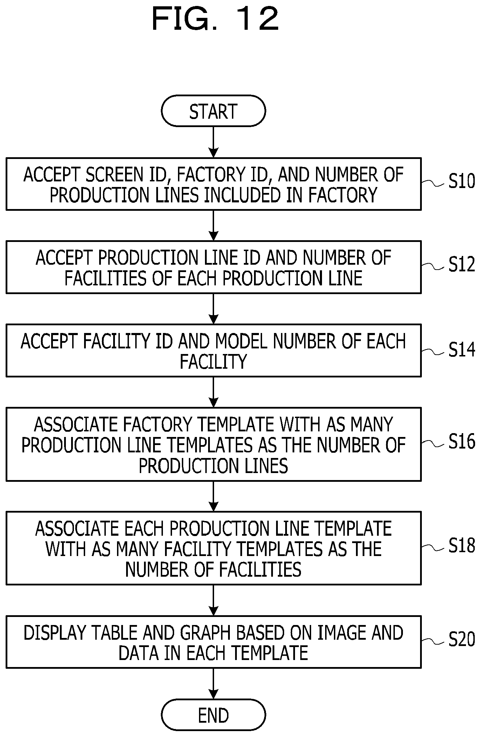

Next, operation of the screen generation assisting apparatus 10 according to the present embodiment is described. In response to an instruction for screen generation issued by a user, the screen generation assisting apparatus 10 executes a screen generation assisting process illustrated in FIG. 12. The screen generation assisting process is an example of a method of assisting screen generation of the disclosed technique.

In step S10, the acceptance unit 12 displays, for example, the factory input screen 70 as illustrated in FIG. 3 in the display unit. When each of the screen ID, the factory ID, and the number of production lines is input in the factory input screen 70 and the "NEXT' button 75 is selected, the process transitions to step S12.

In step S12, the acceptance unit 12 displays, for example, the production line input screen 80 as illustrated in FIG. 4 in the display unit. When each of the production line ID and the number of facilities for each of the production lines is input in the production line input screen 80 and the "NEXT" button 86 is selected, the process transitions to step S14.

In step S14, the acceptance unit 12 displays, for example, the facility input screen 90 as illustrated in FIG. 5 in the display unit. When each of the facility ID and the model number of each of the facilities of each of the production lines is input in the facility input screen 90 and the "GENERATE SCREEN" button 95 is selected, the acceptance unit 12 transfers the values accepted in steps S10 to S14 to the association unit 14.

Next, in step S16, the association unit 14 prepares as many production line templates 21B as the number of production lines accepted in step S10 above and associates the production line templates 21B with the respective production line IDs. The association unit 14 sets a link between each of the objects indicating the production line included in the image designated in the setting information of the factory template 21A and the production line template 21B with which the same production line ID as the production line ID of this object is associated. Thus, the association unit 14 associates the factory template 21A with as many production line templates 21B as the number of production lines.

Next, in step S18, the association unit 14 prepares as many facility templates 21C as the number of facilities accepted in step S12 above and associates the facility templates 21C with the respective facility IDs. The association unit 14 sets a link between each of the objects indicating the facility included in the image designated in the setting information of the production line template 21B and the facility template 21C with which the same facility ID as the facility ID of this object is associated. Thus, the association unit 14 associates each of the production line templates 21B with as many facility templates 21C as the number of facilities.

Next, in step S20, the association unit 14 transfers the template group to the generation unit 16. The generation unit 16 generates the screens in preset regions of the templates 21 by displaying, for example, the images, the tables, and the graphs in accordance with the setting information of the templates 21. In so doing, as the tables and the graphs in the screens of the upper hierarchical levels, the generation unit 16 uses summarized values of data of lower hierarchical levels belonging to upper hierarchical levels as data to be displayed. Then, the screen generation assisting process ends.

As has been described, the screen generation assisting apparatus according to the present embodiment is an apparatus that assists in generating screens hierarchically displaying data. The screen generation assisting apparatus accepts the number of production lines included in a factory and the number of facilities included in each of the production lines. The screen generation assisting apparatus associates a factory template for generating a factory screen with as many production line templates as the number of production lines for generating production line screens. The screen generation assisting apparatus associates each of the production line templates with as many facility templates as the number of facilities. The screen generation assisting apparatus generates a facility screen by displaying data related to the facility in a preset region of each of the facility templates. The screen generation assisting apparatus generates a production line screen by displaying a summarized value of data displayed in as many facility screens as the number of facilities in a corresponding region of the production line template. The screen generation assisting apparatus generates the factory screen by displaying a summarized value of data displayed in as many production line screens as the number of production lines in a corresponding region of the factory template. Thus, only with user's minimum designation including the number of elements in individual hierarchical levels, the screen generation assisting apparatus generates the screens that hierarchically display the data by using the templates and the data prepared in advance. Accordingly, the screen generation assisting apparatus may assist in suppressing errors in registration of the relationships between hierarchical levels in generating screens that hierarchically display data.

The screen generation assisting apparatus according to the present embodiment provides a production line input screen with as many input regions as the number of production lines designated in a factory input screen and provides a facility input screen with as many input regions as the number of facilities designated in the production line input screen. Thus, the screen generation assisting apparatus provides an interactive interface, and accordingly, information used for generating screens may be registered without omission.

Although the above-described embodiment has been described with the example of generation of the screens that hierarchically display the data related to the facilities of the factory, examples to which the disclosed technique is applied are not limited to this.

Although a form in which the screen generation assisting program is stored (installed) in advance in the storage unit has been described according to the above-described embodiment, the present disclosure is not limited to this. The program according to the disclosed technique may be provided in a form in which the program is stored in a storage medium such as a compact disc read-only memory (CD-ROM), a Digital Versatile Disc (DVD)-ROM, or a Universal Serial Bus (USB) memory.

## Claims

1. A screen generation assisting program that causes at least one computer to execute a process, the process comprising:
accepting, in an input screen to which information for generating a screen of a first hierarchical level is input, designation of a number of elements of a second hierarchical level that serves as a lower level than the first hierarchical level;
associating a first template for generating the screen of the first hierarchical level with second templates which are for generating a screen of the second hierarchical level and a number of which is equal to the number of elements;
generating the screen of the second hierarchical level by displaying the pieces of data in regions of the second templates; and
generating the screen of the first hierarchical level by displaying, in region of the first template that corresponds to the regions of the second templates, a summarized value of the same number of the pieces of data of the second hierarchical level as the number of elements.

2. The screen generation assisting program according to claim 1, wherein the process further comprising
setting regions a number of which is equal to the number of elements in an input screen to which information for generating the screen of the second hierarchical level is input.

3. The screen generation assisting program according to claim 1 or 2, wherein
the summarized value is one of value selected from a total of the pieces of data and an average of the pieces of data.

4. The screen generation assisting program according to any one of claims 1 to 3, wherein
the screen includes links for transition to the screens of the second hierarchical level that correspond to the elements of the second hierarchical level.

5. The screen generation assisting program according to any one of claims 1 to 4, wherein the process further comprising:
when the screen is for displaying pieces of data related to individual facilities included in individual production lines of a factory,
accepting a number of the production lines in an input screen to which information for generating a screen of the factory is input; and
accepting a number of the facilities included in each of the production lines in an input screen to which information for generating screens of the production lines is input for each of the production lines.

6. The screen generation assisting program according to claim 5, wherein
a piece of data displayed in the screen of the factory is a summarized value of pieces of data which are displayed in the screens of the production lines a number of which is equal to the number of production lines, and
each of the pieces of data displayed in the screen of the production is a summarized value of pieces of data which are displayed in screens of the facilities a number of which is equal to the number of the facilities associated with the production line.

7. A screen generation assisting apparatus comprising:
an acceptance unit that accepts, in an input screen to which information for generating a screen of a first hierarchical level is input, designation of a number of elements of a second hierarchical level that serves as a lower level than the first hierarchical level;
an association unit that associates a first template for generating the screen of the first hierarchical level with second templates which are for generating a screen of the second hierarchical level and a number of which is equal to the number of elements; and
a generation unit that
generates the screen of the second hierarchical level by displaying the pieces of data in regions of the second templates, and
generates the screen of the first hierarchical level by displaying, in region of the first template that corresponds to the regions of the second templates, a summarized value of the same number of the pieces of data of the second hierarchical level as the number of elements.

8. A screen generation assisting method for a computer to execute a process comprising:
accepting, in an input screen to which information for generating a screen of a first hierarchical level is input, designation of a number of elements of a second hierarchical level that serves as a lower level than the first hierarchical level;
associating a first template for generating the screen of the first hierarchical level with second templates which are for generating a screen of the second hierarchical level and a number of which is equal to the number of elements;
generating the screen of the second hierarchical level by displaying the pieces of data in regions of the second templates; and
generating the screen of the first hierarchical level by displaying, in region of the first template that corresponds to the regions of the second templates, a summarized value of the same number of the pieces of data of the second hierarchical level as the number of elements.

9. The screen generation assisting method according to claim 8, wherein the process further comprising
setting regions a number of which is equal to the number of elements in an input screen to which information for generating the screen of the second hierarchical level is input.

10. The screen generation assisting method according to claim 8 or 9, wherein
the summarized value is one of value selected from a total of the pieces of data and an average of the pieces of data.

11. The screen generation assisting method according to any one of claims 8 to 10, wherein
the screen includes links for transition to the screens of the second hierarchical level that correspond to the elements of the second hierarchical level.

12. The screen generation assisting method according to any one of claims 8 to 11, wherein the process further comprising:
when the screen is for displaying pieces of data related to individual facilities included in individual production lines of a factory,
accepting a number of the production lines in an input screen to which information for generating a screen of the factory is input; and
accepting a number of the facilities included in each of the production lines in an input screen to which information for generating screens of the production lines is input for each of the production lines.

13. The screen generation assisting method according to claim 12, wherein
a piece of data displayed in the screen of the factory is a summarized value of pieces of data which are displayed in the screens of the production lines a number of which is equal to the number of production lines, and
each of the pieces of data displayed in the screen of the production is a summarized value of pieces of data which are displayed in screens of the facilities a number of which is equal to the number of the facilities associated with the production line.
